# EUROPÄISCHE PATENTSCHRIFT

(11) **EP 4 272 284 B1**
(45) Veröffentlichungstag und Bekanntmachung des Hinweises auf die Patenterteilung: **12.02.2025**
(21) Anmeldenummer: 22792812.4
(22) Anmeldetag: 22.09.2022
(51) Int. Cl.: H01M 50/242

(54) **BATTERIEMODULGEHÄUSE FÜR EIN BATTERIEMODUL, BATTERIEMODUL SOWIE ELEKTRISCHER ENERGIESPEICHER**
BATTERY MODULE HOUSING FOR A BATTERY MODULE, BATTERY MODULE, AND ELECTRIC ENERGY STORAGE DEVICE
BOÎTIER DE MODULE DE BATTERIE POUR UN MODULE DE BATTERIE, MODULE DE BATTERIE ET ACCUMULATEUR D'ÉNERGIE ÉLECTRIQUE

(30) Priorität: 01.10.2021 DE 102021004937
(43) Veröffentlichungstag der Anmeldung: 08.11.2023
(73) Patentinhaber: Mercedes-Benz Group AG, 70372 Stuttgart (DE)
(72) Erfinder: MÜLBERGER, Anselm, 73249 Wernau (Neckar) (DE)
(74) Vertreter: Novagraaf Group
(86) Internationale Anmeldenummer: PCT/EP2022/076409
(87) Internationale Veröffentlichungsnummer: WO 2023/052241

(56) Entgegenhaltungen:
- EP-A1- 3 886 202
- DE-A1- 102021 106 166

## Beschreibung

Die Erfindung betrifft ein Batteriemodulgehäuse für ein Batteriemodul eines elektrischen Energiespeichers mit zumindest einer Batteriezelle gemäß dem Oberbegriff von Patentanspruch 1. Ferner betrifft die Erfindung ein Batteriemodul sowie einen elektrischen Energiespeicher.

Aus dem Stand der Technik sind bereits Batteriemodulgehäuse bekannt, welche für einen elektrischen Energiespeicher, beispielsweise im Kraftfahrzeugbau, ausgebildet sind. Innerhalb des Batteriemodulgehäuses kann dann zumindest eine Batteriezelle, insbesondere eine Vielzahl von Batteriezellen, verbaut werden, wobei das Batteriemodulgehäuse somit einen Rahmen für die Batteriezellen bildet. Bei den Batteriezellen kann es sich beispielsweise um Pouchzellen handeln, welche in Abhängigkeit eines Zellzustands, insbesondere in Abhängigkeit von einem aktuellen Ladezustand und in Abhängigkeit eines Alters der Batteriezelle, eine Volumenänderung durchführen. Diese Volumenänderung wird auch als Zellatmung bezeichnet. Es ist dabei von Bedeutung, dass die Volumenänderung der Batteriezelle innerhalb des Batteriemodulgehäuses ausgeglichen werden kann. Ferner ist es bei beispielsweise prismatischen Zellen notwendig, dass ein vorgegebener Druckwert auf die Batteriezellen ausgeübt wird, sodass eine verbesserte Leistung der Batteriezellen abgerufen werden kann.

Gemäß der DE 10 2018 204 220 A1 ist eine Batterie offenbart umfassend mindestens eine Batteriezelle, wobei jede Batteriezelle eine Vielzahl von parallel gestapelten Elektroden aufweist und eine Druckeinrichtung, durch die die Elektroden mit einem Druck beaufschlagbar sind. Ein Rahmen ist allseitig geschlossen. Die Druckeinrichtung und die mindestens eine Batteriezelle sind innerhalb des Rahmens in einer Längsrichtung des Rahmens derart angeordnet, dass, wenn die Druckeinrichtung den Druck ausübt, ein Druckbereich der Druckeinrichtung in der Längsrichtung gegen die Elektroden drückt und ein dem Druckbereich gegenüberliegender Stützbereich der Druckeinrichtung von einer ersten Rahmenwand des Rahmens in einer der Längsrichtung entgegengesetzten Längsrichtung gestützt ist.

Die EP 3 189 552 A2 betrifft eine Spannvorrichtung für Batteriezellen, wobei ein Behältnis, das einen Raum mit einem variablen Volumen umfasst, zur Aufnahme des Fluids ausgebildet ist und wobei das Behältnis derart ausgebildet ist, dass eine Batteriezelle oder eine Vielzahl von Batteriezellen verspannt werden kann.

Die DE 10 2019 007 748 A1 betrifft einen elektrischen Energiespeicher mit wenigstens einem Elektrodenstapel, welcher eine Mehrzahl von in einer Stapelrichtung übereinander angeordneten Lagen von Elektroden und zwischen den Elektroden angeordneten Separatoren umfasst. Wenigstens eine Druckplatte ist zum Ausüben eines entgegen der Stapelrichtung wirkenden Drucks auf den Elektrodenstapel vorgesehen. Wenigstens ein Aktuator ist zum Beaufschlagen der Druckplatte mit einer Kraft vorgesehen. Der Elektrodenstapel und die Druckplatte sind in einem Gehäuse des elektrischen Energiespeichers angeordnet. Der elektrische Energiespeicher weist eine Steuerungseinrichtung zum Ansteuern des wenigstens einen Aktuators auf. Die Steuerungseinrichtung ist dazu ausgebildet, in Abhängigkeit von einer jeweiligen Dicke des wenigstens einen Elektrodenstapels mittels des Aktuators ein Beaufschlagen der Druckplatte mit einer im Wesentlichen konstanten Kraft zu bewirken.

Die EP 3 886 202 A1 bezieht sich auf ein Batteriesystem, das einen Stapel mit einer Vielzahl von Batteriezellen, Fluidfedern und Fluiddruckeinstellmittel umfasst. Die Fluidfedern sind zwischen einer ersten und einer zweiten Endplatte angeordnet und sind so konfiguriert, dass sie einen Druck auf die Batteriezellen ausüben. Mindestens eine der Fluidfedern umfasst eine elastische Vorrichtung, wobei die elastische Vorrichtung einen vordefinierten Elastizitätsmodul aufweist. Das Mittel zur Einstellung des Fluiddrucks ist mit einer oder mehreren Fluidfedern verbunden, die eine elastische Vorrichtung aufweisen, die so konfiguriert ist, dass sie einen Unterdruck im Fluid innerhalb der verbundenen Fluidfedern erzeugt. Außerdem ermöglicht das Batteriesystem die Vermeidung oder Minimierung des Risikos eines Übergreifens eines thermischen Durchgehens zwischen verschiedenen Zellen des Batteriesystems.

Aufgabe der vorliegenden Erfindung ist es, ein Batteriemodulgehäuse, ein Batteriemodul sowie einen elektrischen Energiespeicher zu schaffen, mittels welchen ein verbesserter Betrieb einer Batteriezelle realisiert werden kann.

Diese Aufgabe wird durch ein Batteriemodulgehäuse, ein Batteriemodul sowie einen elektrischen Energiespeicher gemäß den unabhängigen Patentansprüchen gelöst. Vorteilhafte Ausgestaltungsformen sind in den Unteransprüchen angegeben.

Ein erster unabhängiger Aspekt der Erfindung betrifft ein Batteriemodulgehäuse für ein Batteriemodul eines elektrischen Energiespeichers mit zumindest einer Batteriezelle, wobei die zumindest eine Batteriezelle in Abhängigkeit von einem Zellzustand eine Volumenänderung vollzieht, mit zumindest einem Modulrahmen, welcher zumindest einen ersten Aufnahmebereich für die zumindest eine Batteriezelle und einen zweiten Aufnahmebereich für eine Druckregulierungseinrichtung des Batteriemodulgehäuses ausbildet, wobei die Druckregulierungseinrichtung zumindest bereichsweise die zumindest eine Batteriezelle im zusammengebauten Zustand des Batteriemoduls kontaktiert und in Abhängigkeit von der Volumenänderung zum Einstellen eines vorgegebenen Druckwerts auf die Batteriezelle ausgebildet ist.

Es ist dabei vorgesehen, dass die Druckregulierungseinrichtung zumindest einen ersten schlauchartigen und flexiblen Druckkörper und einen separaten zweiten schlauchartigen und flexiblen Druckkörper aufweist, wobei zwischen dem ersten Druckkörper und dem zweiten Druckkörper eine bewegliche Zwischendruckplatte ausgebildet ist, welche der erste Druckkörper und der zweite Druckkörper zumindest bereichsweise kontaktieren.

Insbesondere kann somit ein verbesserter Betrieb der zumindest einen Batteriezelle realisiert werden, da insbesondere ein kontinuierlicher und einfacherer Aufbau der Druckregulierungseinrichtung bereitgestellt werden kann. Insbesondere kann auf Basis der schlauchartigen und flexiblen Druckkörper zuverlässig und konstant verteilter Druck auf die zumindest eine Batteriezelle ausgeübt werden. Durch den ersten Druckkörper und den zweiten Druckkörper können somit geringe Volumenänderungen innerhalb der Druckkörper realisiert werden, wobei auf Basis der zumindest zwei Druckkörper dann dennoch zuverlässig ein entsprechender Druckwert ausgeübt werden kann. Die Zwischendruckplatte ist insbesondere dazu ausgebildet, beispielsweise den Druck des ersten Druckkörpers konstant und regelmäßig verteilt auf den zweiten Druckkörper auszuüben, wobei der zweite Druckkörper beispielsweise über eine Druckplatte mit der zumindest einen Batteriezelle kontaktiert ist. Insbesondere kann dann vorgesehen sein, dass in dem vorgestellten Ausführungsbeispiel sich der erste Druckkörper beispielsweise am Modulrahmen abstützt, wodurch dann der entsprechende Druckwert auf die zumindest eine Batteriezelle, welche sich auf einer gegenüberliegenden Seite des Modulrahmens abstützt, ausgeübt werden kann.

Durch die Verwendung mehrerer Druckkörper oder einer Vielzahl von Druckkörpern kann in zusätzlich bauraumsparender Weise eine große Volumenkompensation der volumenveränderlichen Zellen erfolgen.

Unter der beweglichen Zwischendruckplatte ist vorliegend insbesondere zu verstehen, dass sich diese innerhalb des Modulrahmens, je nach Volumenänderung beziehungsweise Druckregulierung positionsverändern, insbesondere verschieben, kann.

Insbesondere kann somit eine vollflächige Anlage des Druckkörpers an der Zwischendruckplatte und an der Druckplatte und somit eine genaue Kraftbestimmung an den jeweiligen Platten über den Schlauchdruck realisiert werden. Hierzu ist insbesondere kein Sensor notwendig, was zu einer Kostenersparnis führt. Ferner ist keine Durchbiegung der Druckplatte aufzufinden. Des Weiteren kann ein geringes Druckniveau im Schlauch, im Vergleich zu beispielsweise Luftbälgen, bei einem gleichen Zelldruck realisiert werden. Ferner ist die Blocklänge sehr gering im Vergleich zu einer Luftbalglösung, sodass Bauraum eingespart werden kann. Des Weiteren ist eine hohe Bauraumflexibilität gegeben, da insbesondere die schlauchartigen Druckkörper im quadratischen und meist flachen Bauraum des Batteriemodulgehäuses oder des Batteriemoduls besser integriert werden können als entsprechende Luftbälge oder Zylinder. Ferner ist auch Gewichtsersparnis zu verzeichnen, da die entsprechenden schlauchartigen Druckkörper sehr dünn und leicht sind. Die Druckplatte beziehungsweise die Zwischendruckplatte kann ebenfalls sehr schlank ausgeführt werden und aus Material mit geringer Dicke. Insbesondere kann dadurch eine sehr homogene Druckverteilung auf die Batteriezellenfläche realisiert werden.

Insbesondere löst somit die Erfindung die Aufgabe, dass die zumindest eine Batteriezelle, insbesondere eine Vielzahl von Batteriezellen, innerhalb des Batteriemoduls, vorliegend innerhalb des Batteriemodulgehäuses, verspannt werden müssen. Bei den Batteriezellen handelt es sich insbesondere um sogenannte Pouchzellen beziehungsweise um prismatische Zellen, welche beispielsweise eine verstärkte Zellatmung aufweisen, wobei die Zellatmung eine Volumenänderung oder den Ladezustand, den sogenannten State of Charge, beschreibt. Somit ist ein System notwendig, welches die Volumenänderung kompensiert. Zusätzlich kann vorgesehen sein, dass manche Batteriezellen eine sogenannte Verspannkraft benötigen, also einen Druck orthogonal zur Batteriezellenfläche, um entsprechend funktionieren zu können. Beispielsweise bei Feststoffzellen, deren Schichten über Druck zusammengepresst werden, um den Oberflächenkontakt zu optimieren und den Zellwiderstand zu senken, ist eine solche Verspannkraft notwendig. Ferner kann beispielsweise bei sogenannten Lithium-MetallAnoden, die sich über den Ladevorgang als Schicht aufbauen und über den Entladevorgang abbauen, eine entsprechende Verspannkraft notwendig sein. Insbesondere entsteht somit die sogenannte Zellatmung. Darüber hinaus ist es notwendig, solche Batteriezellen zu verpressen, um die Abscheidevorgänge beziehungsweise Ablagerungsvorgänge so zu ermöglichen, sodass sich ebene Schichten auf- und abbauen können. Hierzu ist insbesondere notwendig, dass der Druck auf den Batteriezellen zu jeder Zeit gegeben sein muss, wodurch das Druckregulierungselement, welches insbesondere auch als Druckaufbringungselement bezeichnet werden kann, trotz Volumenänderung der Batteriezelle jederzeit an der Zelle anliegen und eine Kraft übertragen muss.

Ferner ist vorgesehen, dass der erste Druckkörper und/oder der zweite Druckkörper an jeweiligen Randbereichen und/oder Eckbereichen eine Verstärkung aufweist. Beispielsweise kann, sollte das Batteriemodulgehäuse im Wesentlichen quaderförmig bereitgestellt werden, in entsprechenden Ecken eine Verstärkung bereitgestellt werden, sodass eine hohe Lebensdauer des ersten Druckkörpers und des zweiten Druckkörpers zu verzeichnen ist.

Ferner sind der erste Druckkörper und der zweite Druckkörper aus einem gummiartigen Material ausgebildet. Insbesondere können somit der erste Druckkörper und der zweite Druckkörper in einer Art Fahrradschlauch bereitgestellt werden. Dadurch ist es auf einfache Art und Weise ermöglicht, dass die Druckregulierung innerhalb des Batteriemodulgehäuses durchgeführt werden kann. Es handelt sich dabei insbesondere um sehr leichte und kostengünstige Materialien, sodass hochflexibel der erste Druckkörper und der zweite Druckkörper innerhalb des Batteriemodulgehäuses bereitgestellt werden können.

Ebenfalls vorteilhaft ist, wenn zumindest der erste Druckkörper und der zweite Druckkörper fluidisch miteinander verbunden sind. Somit ist lediglich eine Druckregulierungseinrichtung notwendig, um den Druck sowohl im ersten Druckkörper als auch im zweiten Druckkörper einzustellen. Dadurch können Bauraum sowie Bauteile eingespart werden.

In einer weiteren vorteilhaften Ausgestaltungsform sind zumindest der erste Druckkörper und der zweite Druckkörper über eine fluidische Verbindung, welche durch eine Ausnehmung innerhalb der Zwischendruckplatte geführt ist, fluidisch miteinander verbunden. Dadurch ist es ermöglicht, dass bauraumsparend eine fluidische Verbindung zwischen dem ersten Druckkörper und dem zweiten Druckkörper realisiert werden kann. Die Ausnehmung kann beispielsweise in Form eines Lochs beziehungsweise eines Zylinders bereitgestellt werden, wobei dann über eine ebenfalls gummiartige beziehungsweise schlauchartige Verbindung wiederum der erste Druckkörper mit dem zweiten Druckkörper verbunden beziehungsweise verschweißt werden kann. Somit kann eine einfache und dennoch zuverlässige Druckregulierung innerhalb der Druckregulierungseinrichtung bereitgestellt werden.

Es hat sich weiterhin als vorteilhaft erwiesen, wenn an einem Modulrahmen ein Befüllungsventil zum fluidischen Befüllen des ersten Druckkörpers und/oder des zweiten Druckkörpers ausgebildet ist. Insbesondere weist der Modulrahmen lediglich ein einziges Befüllungsventil auf, wobei dann der erste Druckkörper und der zweite Druckkörper jeweils miteinander fluidisch ebenfalls verbunden sind. Somit kann außerhalb des Modulrahmens der erste Druckkörper und/oder der zweite Druckkörper fluidisch befüllt werden.

Des Weiteren hat es sich als vorteilhaft erwiesen, wenn eine Form des ersten Druckkörpers und/oder des zweiten Druckkörpers zumindest bereichsweise im Wesentlichen der Form des zweiten Aufnahmebereichs entspricht. Insbesondere kann durch den flexiblen, insbesondere durch den schlauchartigen und gummiartigen ersten Druckkörper und/oder zweiten Druckkörper sich dieser an die Form des Aufnahmebereichs anpassen. Ferner können der erste Druckkörper und der zweite Druckkörper bereits eine im Wesentlichen vorgefertigte Form, beispielsweise im Wesentlichen quaderförmige, Form aufweisen, sodass eine verbesserte Druckverteilung durch den ersten Druckkörper und/oder den zweiten Druckkörper realisiert werden kann.

Es hat sich weiterhin als vorteilhaft erwiesen, wenn ein Querschnitt des ersten Druckkörpers und/oder des zweiten Druckkörpers im Wesentlichen oval oder im Wesentlichen rund ausgebildet ist. Insbesondere ist dadurch eine einfache Herstellungsweise des ersten Druckkörpers und des zweiten Druckkörpers realisiert. Insbesondere sind der erste Druckkörper und/oder der zweite Druckkörper derart flexibel, dass sich nach einer Druckeingabe die ovale beziehungsweise runde Form an die entsprechende Form des zumindest zweiten Aufnahmebereichs anpassen kann. Somit kann zuverlässig und auf einfache Art und Weise eine Druckregulierung innerhalb des Batteriemodulgehäuses realisiert werden.

Ein weiterer Aspekt der Erfindung betrifft ein Batteriemodul für einen elektrischen Energiespeicher mit zumindest einem Batteriemodulgehäuse nach dem vorhergehenden Aspekt und mit zumindest einer Batteriezelle, wobei die zumindest eine Batteriezelle in Abhängigkeit von einem Zellzustand eine Volumenänderung vollzieht.

Ein nochmals weiterer Aspekt der Erfindung betrifft einen elektrischen Energiespeicher, insbesondere für ein zumindest teilweise elektrisch betriebenes Kraftfahrzeug, mit zumindest einem Batteriemodul nach dem vorhergehenden Aspekt. Insbesondere kann beispielsweise der elektrische Energiespeicher noch ein zweites Batteriemodul nach dem vorhergehenden Aspekt aufweisen. Ferner kann der elektrische Energiespeicher noch weitere Batteriemodule aufweisen. Des Weiteren kann der elektrische Energiespeicher beispielsweise ein entsprechendes Managementsystem aufweisen, um eine Druckregulierung sowie entsprechende Ladezustände des Batteriemoduls zu überwachen. Der elektrische Energiespeicher kann beispielsweise als Traktionsbatterie eines zumindest teilweise elektrisch betriebenen Kraftfahrzeugs ausgebildet sein.

Ferner betrifft ein nochmals weiterer Aspekt der Erfindung ein Kraftfahrzeug mit zumindest einem elektrischen Energiespeicher nach dem vorhergehenden Aspekt. Das Kraftfahrzeug ist insbesondere als zumindest teilweise elektrisch betriebenes Kraftfahrzeug, insbesondere als vollelektrisch betriebenes Kraftfahrzeug, ausgebildet.

Ein unabhängiger zweiter Aspekt der Erfindung betrifft ein Batteriemodulgehäuse für ein Batteriemodul eines elektrischen Energiespeichers mit zumindest einer Batteriezelle, wobei die zumindest eine Batteriezelle in Abhängigkeit von einem Zellzustand eine Volumenänderung vollzieht, mit zumindest einem Modulrahmen, welcher zumindest einen ersten Aufnahmebereich für die zumindest eine Batteriezelle und einen zweiten Aufnahmebereich für eine Druckregulierungseinrichtung des Batteriemodulgehäuses ausbildet, wobei die Druckregulierungseinrichtung zumindest bereichsweise die zumindest eine Batteriezelle im zusammengebauten Zustand des Batteriemoduls kontaktiert und in Abhängigkeit von der Volumenänderung zum Einstellen eines vorgegebenen Druckwerts auf die Batteriezelle ausgebildet ist. Es ist dabei vorgesehen, dass die Druckregulierungseinrichtung zumindest einen ersten schlauchartigen und flexiblen Druckkörper aufweist, wobei zumindest der eine Druckkörper aus einem gummiartigen Material ausgebildet ist.

Ferner betrifft ein nochmals unabhängiger dritter Aspekt der Erfindung ein Batteriemodulgehäuse für ein Batteriemodul eines elektrischen Energiespeichers mit zumindest einer Batteriezelle, wobei die zumindest eine Batteriezelle in Abhängigkeit von einem Zellzustand eine Volumenänderung vollzieht, mit zumindest einem Modulrahmen, welcher zumindest einen ersten Aufnahmebereich für die zumindest eine Batteriezelle und einen zweiten Aufnahmebereich für eine Druckregulierungseinrichtung des Batteriemodulgehäuses ausbildet, wobei die Druckregulierungseinrichtung zumindest bereichsweise die zumindest eine Batteriezelle im zusammengebauten Zustand des Batteriemoduls kontaktiert und in Abhängigkeit von der Volumenänderung zum Einstellen eines vorgegebenen Druckwerts auf die Batteriezelle ausgebildet ist. Es ist dabei vorgesehen, dass die Druckregulierungseinrichtung zumindest einen schlauchartigen flexiblen Druckkörper aufweist, wobei zumindest der eine Druckkörper an jeweiligen Randbereichen und/oder Eckbereichen eine Verstärkung aufweist.

Vorteilhafte Ausgestaltungsformen des ersten Erfindungsaspekts sind als vorteilhafte Ausgestaltungsformen des Batteriemoduls sowie des elektrischen Energiespeichers und des Kraftfahrzeugs anzusehen. Ferner sind ebenfalls die vorteilhaften Ausgestaltungsformen des ersten Aspekts der Erfindung auch als vorteilhafte Ausgestaltungsformen der beiden unabhängigen zweiten und dritten Aspekte, also der Druckregulierungseinrichtung mit dem schlauchartigen flexiblen Druckkörper, wobei der Druckkörper aus einem gummiartigen Material besteht und/oder wobei der Druckkörper an jeweiligen Randbereichen und/oder Eckbereichen eine Verstärkung aufweist, anzusehen. Die Merkmale des ersten unabhängigen Aspekts sind dabei frei kombinierbar mit den Merkmalen des zweiten unabhängigen Aspekts sowie des dritten unabhängigen Aspekts.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Seitenansicht einer Ausführungsform eines Kraftfahrzeugs mit einer Ausführungsform eines elektrischen Energiespeichers;
- Fig. 2: eine schematische Ansicht einer Ausführungsform eines Batteriemoduls;
- Fig. 3: eine weitere schematische Draufsicht auf das Batteriemodul gemäß Fig. 2;
- Fig. 4: eine schematische Perspektivansicht gemäß einer Ausführungsform eines Druckkörpers einer Ausführungsform eines Batteriemodulgehäuses; und
- Fig. 5: eine schematische perspektivische Ansicht einer Ausführungsform eines Batteriemoduls.

In den Fig. sind gleiche oder funktionsgleiche Elemente mit den gleichen Bezugszeichen versehen.

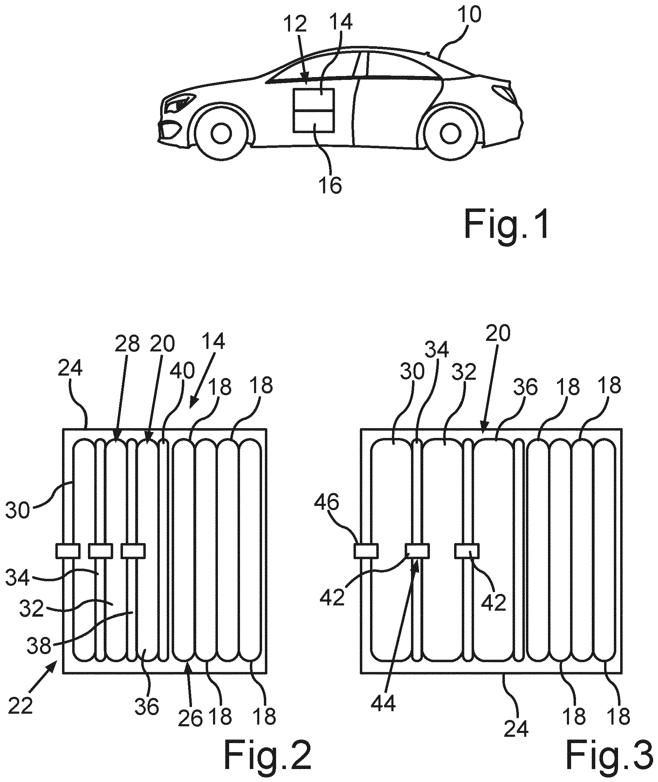

Fig. 1 zeigt eine schematische Seitenansicht einer Ausführungsform eines Kraftfahrzeugs 10 mit einer Ausführungsform eines elektrischen Energiespeichers 12. Das Kraftfahrzeug 10 kann insbesondere als zumindest teilweise elektrisch betriebenes Kraftfahrzeug, insbesondere als vollelektrisch betriebenes Kraftfahrzeug, ausgebildet sein. Der elektrische Energiespeicher 12 kann dann beispielsweise als Traktionsbatterie zum Antreiben einer elektrischen Antriebseinrichtung des zumindest teilweise elektrisch betriebenen Kraftfahrzeugs 10 ausgebildet sein. Ferner kann der elektrische Energiespeicher 12 zum Betrieb eines Bordnetzes des Kraftfahrzeugs 10 ausgebildet sein. Der elektrische Energiespeicher 12 weist vorliegend insbesondere ein erstes Batteriemodul 14 sowie ein zweites Batteriemodul 16 auf.

Fig. 2 zeigt eine schematische Draufsicht gemäß einer Ausführungsform der Batteriemodule 14, 16, wobei nachfolgend lediglich am ersten Batteriemodul 14 die entsprechenden Merkmale beschrieben sind. Die Merkmale sind jedoch auch auf das zweite Batteriemodul 16 übertragbar. Insbesondere zeigt somit die Fig. 2 das erste Batteriemodul 14. Das Batteriemodul 14 weist zumindest eine Batteriezelle 18, vorliegend insbesondere vier Batteriezellen 18, auf. Bei den Batteriezellen 18 handelt es sich insbesondere um sogenannte Feststoffzellen, welche eine Zellatmung betreiben, und dabei eine Volumenänderung in Abhängigkeit von einem Alterungszustand sowie von einem Ladezustand der Batteriezellen 18 durchführen. Hierzu, um eine Zellatmung durchführen zu können, ist erfindungsgemäß eine Druckregulierungseinrichtung 20 vorgesehen. Die Druckregulierungseinrichtung 20 wiederum ist Teil eines Batteriemodulgehäuses 22.

Das Batteriemodulgehäuse 22 ist insbesondere für den elektrischen Energiespeicher 12 ausgebildet, wobei zumindest die eine Batteriezelle 18 in Abhängigkeit von einem jeweiligen Zellzustand eine Volumenänderung vollzieht. Das Batteriemodulgehäuse 22 weist hierzu insbesondere einen Modulrahmen 24 auf, welcher zumindest einen ersten Aufnahmebereich 26 für die zumindest eine Batteriezelle 18 und einen zweiten Aufnahmebereich 28 für die Druckregulierungseinrichtung 20 ausbildet, wobei die Druckregulierungseinrichtung 20 zumindest bereichsweise die zumindest eine Batteriezelle 18 im zusammengebauten Zustand des Batteriemoduls 14 kontaktiert und in Abhängigkeit von der Volumenänderung zum Einstellen eines vorgegebenen Druckwerts auf die Batteriezelle 18 ausgebildet ist.

Es ist dabei vorgesehen, dass die Druckregulierungseinrichtung 20 zumindest einen ersten schlauchartigen und flexiblen Druckkörper 30 und einen separaten zweiten schlauchartigen und flexiblen Druckkörper 32 aufweist, wobei zwischen dem ersten Druckkörper 30 und dem zweiten Druckkörper 32 eine bewegliche Zwischendruckplatte 34 ausgebildet ist, welche der erste Druckkörper 30 und der zweite Druckkörper 32 zumindest bereichsweise kontaktieren. Insbesondere ist vorliegend gezeigt, dass die Druckregulierungseinrichtung 20 auch einen dritten Druckkörper 36 aufweisen kann, wobei zwischen dem zweiten Druckkörper 32 und dem dritten Druckkörper 36 eine weitere Zwischenplatte 38 ausgebildet ist. Des Weiteren ist zu sehen, dass im vorliegenden Ausführungsbeispiel zwischen dem dritten Druckkörper 36 und einer der Batteriezellen 18 eine Druckplatte 40 ausgebildet ist. Sollte beispielsweise das Batteriemodulgehäuse 22 lediglich zwei Druckkörper 30, 32 aufweisen, so kann die Druckplatte 40 zwischen dem zweiten Druckkörper 32 und der Batteriezelle 18 ausgebildet sein. Die Druckregulierungseinrichtung 20 kann auch mehr als drei Druckkörper 30, 32, 36 aufweisen.

Fig. 3 zeigt eine weitere schematische Draufsicht gemäß dem Ausführungsbeispiel aus Fig. 2. In Fig. 3 ist zu sehen, dass die Druckregulierungseinrichtung 20 die Druckkörper 30, 32 und 36 entsprechend "aufgeblasen" hat und somit den Druckwert angepasst hat, da beispielsweise eine Zellatmung der Batteriezellen 18 durchgeführt ist. Insbesondere ist zu sehen, dass sich dabei die Druckkörper 30, 32, 36 an dem Modulrahmen 24 abstützen. Ferner stützen sich auch die Batteriezellen 18 an dem Modulrahmen 24 ab.

Insbesondere kann vorgesehen sein, dass der erste Druckkörper 30 und/oder der zweite Druckkörper 32, sowie vorliegend der dritte Druckkörper 36, aus einem gummiartigen Material ausgebildet sind. Dieser Aspekt ist auch als unabhängiger Aspekt der Erfindung zu betrachten.

Ferner zeigt die Fig. 3, dass zumindest der erste Druckkörper 30 und der zweite Druckkörper 32 über eine fluidische Verbindung 42 miteinander verbunden sind. Ferner ist auch im vorliegenden Ausführungsbeispiel der zweite Druckkörper 32 mit dem dritten Druckkörper 36 fluidisch über die fluidische Verbindung 42 verbunden. Insbesondere kann hierbei vorgesehen sein, dass durch eine Ausnehmung 44 innerhalb der Zwischendruckplatte 34 die fluidische Verbindung 44 geführt ist.

Ferner zeigt die Fig. 3, dass an dem Modulrahmen 24 ein Befüllungsventil 46 zum fluidischen Befüllen des ersten Druckkörpers 30 und/oder des zweiten Druckkörpers 32 ausgebildet ist.

Weiterhin kann vorgesehen sein, dass eine Form des ersten Druckkörpers 30 und/oder des zweiten Druckkörpers 32 zumindest bereichsweise im Wesentlichen der Form des zweiten Aufnahmebereichs 28 entspricht, wobei des Weiteren vorgesehen sein kann, dass ein Querschnitt des ersten Druckkörpers 30 und/oder des zweiten Druckkörpers 32 im Wesentlichen oval oder im Wesentlichen rund ausgebildet ist.

Insbesondere zeigen somit die Fig. 2 und 3, dass ein Fluid in die elastischen Schläuche beziehungsweise Druckkörper 30, 32, 36 gepumpt werden kann, wobei das Fluid dabei sowohl kompressibel, zum Beispiel Luft, oder auch inkompressibel, zum Beispiel Flüssigkeit, sein kann. Die Druckkörper 30, 32, 36 sind dabei insbesondere ein Schlauch, wobei auch andere Formen, zum Beispiel Blasen oder balgenförmige Elemente möglich sind. Im Falle des Schlauches kann beispielsweise der Querschnitt rund, aber auch oval ausgestaltet sein. Im Falle eines Schlauches können die jeweiligen offenen Enden beispielsweise zugeschweißt sein.

Der Schlauch ist selbst nicht tragend und stützt sich an dem Modulrahmen 24 ab, wodurch es möglich ist, den Schlauch sehr dünn und flexibel auszuführen, sodass er eine sehr hohe Verformbarkeit aufweist. Der Schlauch kann durch die Abstützung auf deutlich höhere Drücke aufgeblasen werden, als er dies beispielsweise ohne Mantel vollbringen könnte. Es sind dabei Druckwerte größer 16 bar erzielbar, wobei dabei vergleichbare Materialien, die insbesondere im Fahrradbereich eingesetzt werden, genutzt werden können. Wird der dünne Schlauch aufgeblasen, so füllt er die Kavität der normalerweise rechteckigen Modulbauform aus. Das Material ist derart flexibel, dass sich der Schlauch der Modulgeometrie anpasst. Die Modulkavität ist so ausgelegt, dass keine spitzen Kanten den Schlauch beschädigen können. Radien sind derart vorgesehen, dass sich der Schlauch gut anlegen kann. Entsprechende Spalte sind dabei minimal gehalten. Eine weitere Möglichkeit besteht darin, dass sich der Schlauch beim ersten Aufblasen plastisch verformt und die Form der Modulkavität annimmt. Die Schlauchformen sind dabei, wie bereits erwähnt, üblicherweise oval, es ist jedoch auch möglich, eine Schlauchform derart auszulegen, dass der Schlauch sich in der Kavität eher quadratisch ausbreitet. Darüber hinaus kann das Schlauchmaterial an bestimmten Stellen verstärkt werden, um beispielsweise Biegungen/Radien zu schützen.

Um größere Hübe realisieren zu können, ist es möglich, mehrere Schläuche hintereinander einzubringen und durch dünne Platten abzutrennen. Diese Platten werden insbesondere als die Zwischendruckplatte 34 bezeichnet, wobei diese keine mechanische tragende Rolle erfüllt, sondern lediglich als Anlagefläche zwischen den Luftschläuchen dient, sodass diese nicht eine Formveränderung durchführen. Sind mehrere Schläuche hintereinander geschaltet, so sind die Schläuche insbesondere über entsprechende Luftverbindungen, beispielsweise Ventile oder Sperrvorrichtungen, verbunden, die dafür sorgen, dass der Fluiddruck zwischen den Schläuchen gleich ist. Einer der Schläuche, vorzugsweise der am Modulrand liegt, vorzugsweise vorliegend der erste Druckkörper 30, wird mit dem Fluid versorgt. Dieses Ventil ist ein Druckregelventil und misst und reguliert den Druck in den Schläuchen. Die Ventile und Luftverbindungen sind vorzugsweise mittig in den Zwischendruckplatten 34 und den Druckkörper 30, 32, 36 angebracht. Durch das Druckventil ist es möglich, den Druck in den Schläuchen zu steuern. Ohne Beschränkung der Erfindung können andere Ventile und Verbindungsstücke eingesetzt werden in Abhängigkeit des verwendeten Fluids.

Da die Schläuche immer vollflächig an den Zwischendruckplatten 34 sowie der Druckplatte 40 anliegen, die den Übergang zur Batteriezelle 18 darstellt, ist es möglich, über den Druck im Schlauch jederzeit den Druck auf die Batteriezellen 18 zu bestimmen. Dies ist nur möglich, da der Schlauch so dünn und flexibel ist, dass er sich bei dem geringsten Druck vollständig in die Kavität ausfüllt und dessen Form annimmt. Wenn sich das Material nach dem ersten Aufpumpen bereits plastisch verformt hat und die Geometrie der Kavität angenommen hat, bleibt die Form auch unter sehr geringen Drücken ebenfalls bestehen.

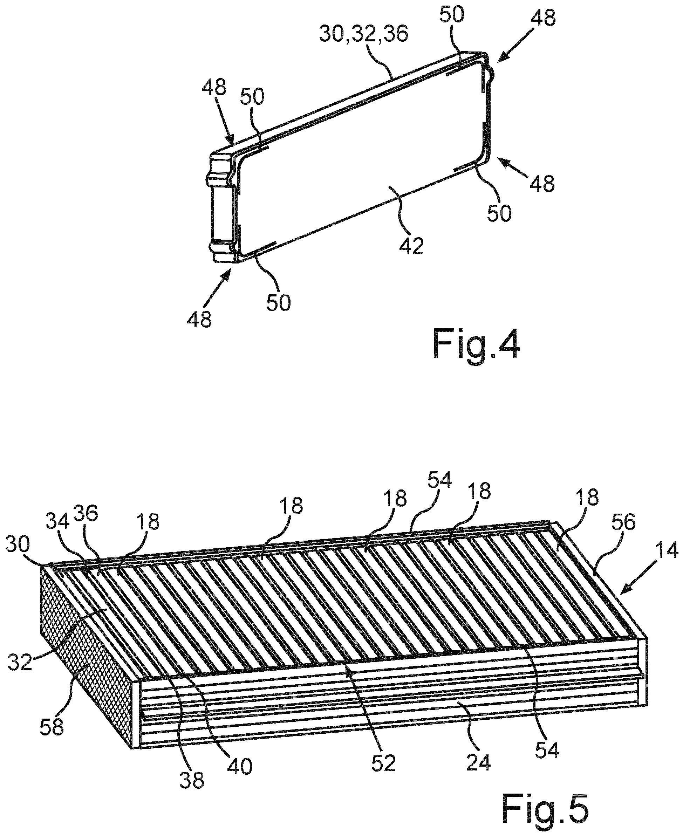

Fig. 4 zeigt eine schematische Perspektivansicht gemäß einer Ausführungsform eines Druckkörpers 30, 32, 36. Vorliegend ist insbesondere gezeigt, dass der Druckkörper 30, 32, 36 im Wesentlichen rechteckförmig ist und sich an die Form des Batteriemodulgehäuses 22 angepasst hat. Ferner ist gezeigt, dass insbesondere in entsprechenden Eckbereichen 48 Verstärkungen 50 ausgebildet sind, sodass eine Beschädigung der Druckkörper 30, 32, 36 verhindert ist. Hierbei handelt es sich ebenfalls um einen auch unabhängigen Aspekt der Erfindung, welcher also sowohl in Zusammenschau mit den zwei Druckkörpern 30, 32 als auch alleine zu betrachten ist.

Fig. 5 zeigt eine schematische Perspektivansicht einer Ausführungsform eines Batteriemoduls 14. Vorliegend ist insbesondere der Modulrahmen 24 gezeigt. Des Weiteren sind die drei Druckkörper 30, 32, 36 gezeigt. Die Druckkörper 30, 32, 36 sind jeweils über die Zwischendruckplatten 34, 38 voneinander getrennt. Zwischen dem dritten Druckkörper 36 und den Batteriezellen 18 ist wiederum die Druckplatte 18 angeordnet. Vorliegend weist das Batteriemodul 14 eine Vielzahl von Batteriezellen 18 auf. Insbesondere kann dabei vorgesehen sein, dass zum Beispiel die Batteriezellen 18 innerhalb einer Kassettenführung 52 angeordnet sind, sodass sich diese bei der Zellatmung innerhalb des Modulrahmens 24 verschieben können. Mit anderen Worten hängen die Batteriezellen 18 in entsprechenden Schienen 54 beweglich und können sich, je nach Zellatmung und Druckregulierung, entsprechend ausdehnen. Insbesondere zeigt die Fig. 5 ferner, dass sich die Batteriezellen 18 insbesondere an einer ersten Seitenwand 56 des Modulrahmens 24 abstützen und der erste Druckkörper 30 sich an einer der ersten Seitenwand 56 gegenüberliegenden zweiten Seitenwand 58 abstützt. Durch diese Abstützung wiederum ist es ermöglicht, dass durch die Druckregulierung und die Ausdehnung der Batteriezellen 18 der entsprechenden Druckwert innerhalb des Batteriemoduls 14 einstellen kann.

## Patentansprüche

1. Batteriemodulgehäuse (22) für ein Batteriemodul (14, 16) eines elektrischen Energiespeichers (12) mit zumindest einer Batteriezelle (18), wobei die zumindest eine Batteriezelle (18) in Abhängigkeit von einem Zellzustand eine Volumenänderung vollzieht, mit zumindest einem Modulrahmen (24), welcher zumindest eine Druckregulierungseinrichtung (20), einen ersten Aufnahmebereich (26) für die zumindest eine Batteriezelle (18) und einen zweiten Aufnahmebereich (28) für die zumindest eine Druckregulierungseinrichtung (20) des Batteriemodulgehäuses (22) ausbildet, wobei die Druckregulierungseinrichtung (20) zumindest bereichsweise die zumindest eine Batteriezelle (18) im zusammengebauten Zustand des Batteriemoduls (14, 16) kontaktieren kann und in Abhängigkeit von der Volumenänderung zum Einstellen eines vorgegebenen Druckwerts auf die Batteriezelle (18) ausgebildet ist,
wobei
die Druckregulierungseinrichtung (20) zumindest einen ersten schlauchartigen und flexiblen Druckkörper (30) und einen separaten zweiten schlauchartigen und flexiblen Druckkörper (32) aufweist, wobei zwischen dem ersten Druckkörper (30) und dem zweiten Druckkörper (32) eine bewegliche Zwischendruckplatte (34) ausgebildet ist, welche der erste Druckkörper (30) und der zweite Druckkörper (32) zumindest bereichsweise kontaktieren, wobei
der erste Druckkörper (30) und/oder der zweite Druckkörper (32) an jeweiligen Randbereichen und/oder Eckbereichen (48) eine Verstärkung (50) aufweist, **dadurch gekennzeichnet, dass**
der erste Druckkörper (30) und/oder der zweite Druckkörper (32) aus einem gummiartigen Material ausgebildet sind.

2. Batteriemodulgehäuse (22) nach Anspruch 1,
**dadurch gekennzeichnet, dass**
zumindest der erste Druckkörper (30) und der zweite Druckkörper (32) fluidisch miteinander verbunden sind.

3. Batteriemodulgehäuse (22) nach Anspruch 2,
**dadurch gekennzeichnet, dass**
zumindest der erste Druckkörper (30) und der zweite Drückkörper (32) über eine fluidische Verbindung (42), welche durch eine Ausnehmung (44) innerhalb der Zwischendruckplatte (40) geführt ist, fluidisch miteinander verbunden sind.

4. Batteriemodulgehäuse (22) nach einem der vorhergehenden Ansprüche,
**dadurch gekennzeichnet, dass**
an dem Modulrahmen (24) ein Befüllungsventil (46) zum fluidischen Befüllen des ersten Druckkörpers (30) und/oder des zweiten Druckkörpers (32) ausgebildet ist.

5. Batteriemodulgehäuse (22) nach einem der vorhergehenden Ansprüche,
**dadurch gekennzeichnet, dass**
eine Form des ersten Druckkörpers (30) und/oder des zweiten Druckkörpers (32) zumindest bereichsweise der Form des zweiten Aufnahmebereichs (28) entspricht.

6. Batteriemodulgehäuse (22) nach einem der vorhergehenden Ansprüche,
**dadurch gekennzeichnet, dass**
ein Querschnitt des ersten Druckkörpers (30) und/oder des zweiten Druckkörpers (32) oval oder rund ausgebildet ist.

7. Batteriemodul (14, 16) für einen elektrischen Energiespeicher (12) mit zumindest einem Batteriemodulgehäuse (22) nach einem der Ansprüche 1 bis 6 und mit zumindest einer Batteriezelle 18), wobei die zumindest eine Batteriezelle (18) in Abhängigkeit von einem Zellzustand eine Volumenänderung vollzieht.

8. Elektrischer Energiespeicher (12), insbesondere für ein zumindest teilweise elektrisch betriebenes Kraftfahrzeug (10), mit zumindest einem Batteriemodul (14, 16) nach Anspruch 7.

## Claims

1. A battery module housing (22) for a battery module (14, 16) of an electrical energy storage device (12) having at least one battery cell (18), wherein the at least one battery cell (18) undergoes a change in volume in accordance with a cell state, comprising at least one module frame (24) which forms at least one pressure-regulating device (20), a first receiving region (26) for the at least one battery cell (18) and a second receiving region (28) for the at least one pressure-regulating device (20) of the battery module housing (22), wherein the pressure-regulating device (20) can be at least partially in contact with the at least one battery cell (18) in the assembled state of the battery module (14, 16) and is designed to adjust a predetermined pressure value on the battery cell (18) in accordance with the change in volume,
wherein
the pressure-regulating device (20) has at least one first tube-like and flexible pressure body (30) and a separate second tube-like and flexible pressure body (32), wherein a movable intermediate pressure plate (34) which is at least partially in contact with the first pressure body (30) and the second pressure body (32) is formed between the first pressure body (30) and the second pressure body (32), wherein
the first pressure body (30) and/or the second pressure body (32) has a reinforcement (50) at respective edge regions and/or corner regions (48),
**characterized in that**
the first pressure body (30) and/or the second pressure body (32) are formed from a rubber-like material.

2. The battery module housing (22) according to claim 1,
**characterized in that**
at least the first pressure body (30) and the second pressure body (32) are fluidically connected to one another.

3. The battery module housing (22) according to claim 2,
**characterized in that**
at least the first pressure body (30) and the second pressure body (32) are fluidically connected to one another via a fluidic connection (42) which is guided through a recess (44) inside the intermediate pressure plate (40).

4. The battery module housing (22) according to any one of the preceding claims,
**characterized in that**
a filling valve (46) for fluidically filling the first pressure body (30) and/or the second pressure body (32) is formed on the module frame (24).

5. The battery module housing (22) according to any one of the preceding claims,
**characterized in that**
a shape of the first pressure body (30) and/or of the second pressure body (32) at least partially corresponds to the shape of the second receiving region (28).

6. The battery module housing (22) according to any one of the preceding claims,
**characterized in that**
a cross section of the first pressure body (30) and/or of the second pressure body (32) is designed to be oval or round.

7. The battery module (14, 16) for an electrical energy storage device (12) having at least one battery module housing (22) according to any one of claims 1 to 6 and having at least one battery cell (18), wherein the at least one battery cell (18) undergoes a change in volume in accordance with a cell state.

8. An electrical energy storage device (12), in particular for an at least partially electrically operated motor vehicle (10), comprising at least one battery module (14, 16) according to claim 7.

## Revendications

1. Boîtier (22) de module de batterie pour un module de batterie (14, 16) d'un accumulateur d'énergie électrique (12) comportant au moins un élément de batterie (18), dans lequel l'au moins un élément de batterie (18) effectue une variation de volume en fonction d'un état d'élément, comportant au moins un cadre de module (24), qui conçoit au moins un dispositif de régulation de pression (20), une première zone de réception (26) pour l'au moins un élément de batterie (18) et une seconde zone de réception (28) pour l'au moins un dispositif de régulation de pression (20) du boîtier (22) de module de batterie, dans lequel le dispositif de régulation de pression (20) peut entrer en contact au moins par zones avec l'au moins un élément de batterie (18) à l'état assemblé du module de batterie (14, 16) et est conçu pour le réglage d'une valeur de pression prédéfinie sur l'élément de batterie (18) en fonction de la variation de volume,
dans lequel
le dispositif de régulation de pression (20) présente au moins un premier corps de pression (30) en forme de tuyau et flexible et un second corps de pression (32) séparé en forme de tuyau et flexible, dans lequel une plaque de pression intermédiaire (34) mobile est conçue entre le premier corps de pression (30) et le second corps de pression (32), le premier corps de pression (30) et le second corps de pression (32) entrant en contact avec la plaque de pression intermédiaire au moins par zones, dans lequel
le premier corps de pression (30) et/ou le second corps de pression (32) présente un renforcement (50) sur des zones de bord et/ou des zones d'angle (48) respectives,
**caractérisé en ce que**
le premier corps de pression (30) et/ou le second corps de pression (32) sont conçus en un matériau de type caoutchouc.

2. Boîtier (22) de module de batterie selon la revendication 1,
**caractérisé en ce**
**qu'**au moins le premier corps de pression (30) et le second corps de pression (32) sont reliés fluidiquement entre eux.

3. Boîtier (22) de module de batterie selon la revendication 2,
**caractérisé en ce**
**qu'**au moins le premier corps de pression (30) et le second corps de pression (32) sont reliés fluidiquement entre eux par l'intermédiaire d'une liaison fluidique (42) qui est guidée à travers un évidement (44) à l'intérieur de la plaque de pression intermédiaire (40).

4. Boîtier (22) de module de batterie selon l'une des revendications précédentes,
**caractérisé en ce**
**qu'**une soupape de remplissage (46) est conçue sur le cadre de module (24) pour le remplissage fluidique du premier corps de pression (30) et/ou du second corps de pression (32).

5. Boîtier (22) de module de batterie selon l'une des revendications précédentes,
**caractérisé en ce**
**qu'**une forme du premier corps de pression (30) et/ou du second corps de pression (32) correspond au moins par zones à la forme de la seconde zone de réception (28).

6. Boîtier (22) de module de batterie selon l'une des revendications précédentes,
**caractérisé en ce**
**qu'une** section transversale du premier corps de pression (30) et/ou du second corps de pression (32) est conçue ovale ou ronde.

7. Module de batterie (14, 16) pour un accumulateur d'énergie électrique (12) comportant au moins un boîtier (22) de module de batterie selon l'une des revendications 1 à 6 et comportant au moins un élément de batterie (18), dans lequel l'au moins un élément de batterie (18) effectue un changement de volume en fonction d'un état d'élément.

8. Accumulateur d'énergie électrique (12), en particulier pour un véhicule automobile (10) fonctionnant au moins partiellement à l'électricité, comportant au moins un module de batterie (14, 16) selon la revendication 7.
